# EUROPEAN PATENT APPLICATION

(11) **EP 0 611 044 A1**
(43) Date of publication of application: **17.08.1994**
(21) Application number: 94300398.8
(22) Date of filing: 19.01.1994
(51) Int. Cl.: B23D 43/04

(54) **Broaching tool**

(30) Priority: 26.01.1993 GB 9301450
(71) Applicant: MARBAIX LAPOINTE LIMITED, Watford, Hertfordshire, WD2 8HS (GB)
(72) Inventor: Julier, Keith Henry, Leighton Buzzard, Bedfordshire LU7 8DL (GB); Burridge, Brian John, Hemel Hempstead, Hertfordshire HP2 7JF (GB)
(74) Representative: Blatchford, William Michael

(57) **Abstract**

An improved broaching tool for a broaching machine comprises an elongated tool body (10) capable of being secured to a tool carrier of the broaching machine and having a plurality of openings in the form of transverse slots (16) for receiving respective cutting inserts (20). Cutting inserts (20) received in the slots (16) are transversely adjustable and are indexable providing a number of cutting surfaces with each insert.

## Description

The present invention relates to a broaching tool.

A broaching tool such as is suitable for the roughing of firtree and dovetail slots in turbine, compressor and turbocharger discs, is subject to a high rate of wear due to the abrasive nature and hardness of the materials being broached and the inherent severity of this particular metal removing process. These conditions are further compounded by the fact that all material removed by the cutting action has no free egress from the space in front of the cutting edge of each insert and, in that space, such material is constantly in motion and increasing in volume during the total time the cutting insert is in contact with the workpiece.

In order to at least minimise these wear effects and to provide the opportunity for faster than conventional cutting speeds, the present invention provides a broaching tool for a broaching machine comprising an elongated tool body capable of being secured to a tool carrier of the broaching machine and having a plurality of openings in the form of transverse slots to receive respective cutting inserts made of a wear resistant material, the inserts being detachable mounted relative to respective insert cartridges which are themselves detachably securable in the respective openings in the body. The cartridges can be adjusted in position transversely within the slots to obtain the correct lateral position of each cutting insert relative to the preceding or following cutting insert. The cartridges are arranged to carry right or left hand cutting inserts and in a preferred embodiment there are alternate right and left hand cutting inserts mounted along the length of the body at respective right and left longitudinal edges of the tool body, for presentation to a workpiece.

The cutting inserts are themselves indexable and replaceable in a simple and quick manner without the need for complete disassembly. The slots may be either perpendicular to the longituindal axis of the body or slightly inclined relative to a line normal thereto and may extend transversely either perpendicular to the longitudinal side edges of the body or slightly inclined relative to a line normal thereto. The actual angles of the slots are selected in accordance with the nature of the material being cut.

Suitably, the cutting inserts are disposed on cartridges wherein the cutting edges are co-planar to provide a flat, machined surface.

An embodiment of the present invention will now be described by way of example with reference to the accompanying drawings, in which:
Figure 1 is a sectional side view of a broaching tool in accordance with the invention;
Figure 2 is a plan view of the broaching tool of Figure 1 in the direction of the arrow C;
Figure 3a is a sectional view on the line 4-4 in Figure 1 in the direction of the arrow A;
Figure 3b is a sectional view on the line 4-4 in Figure 1 in the direction of the arrow B; and
Figure 4 is a side view of one cutting insert assembly of the broaching tool of Figure 1.

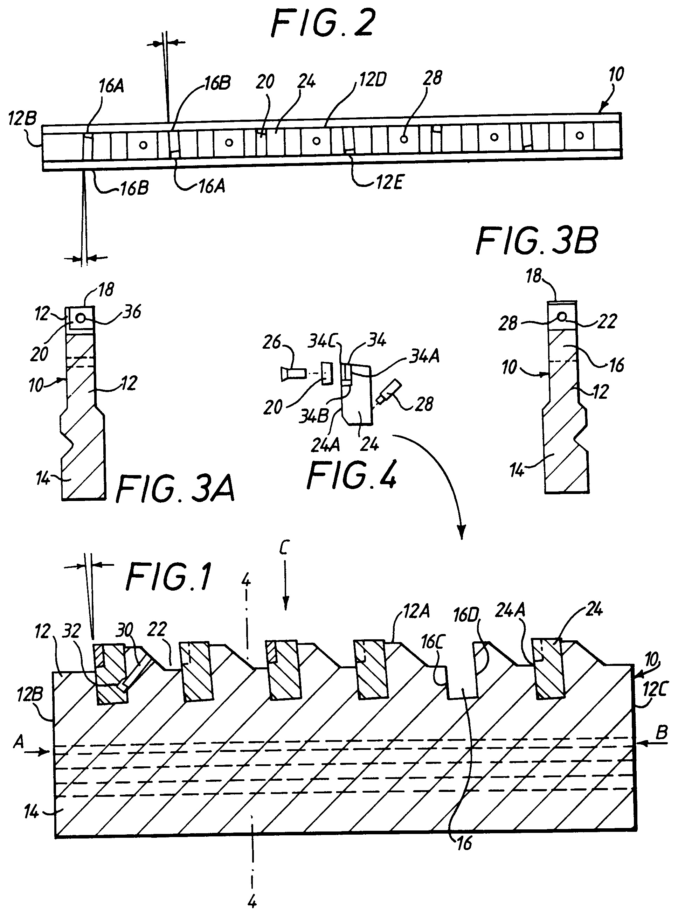

The broaching tool shown in Figure 1 has an elongated cutter body 10, which has an upper portion 12 that is rectangular in cross-section and a lower portion 14 shaped for securing to a tool carrier of a broaching machine (not shown) by various means well known so that the body 10 can be moved relative to a workpiece. The upper portion of the body has an upper surface 12A, front and rear faces, 12B and 12C, respectively, and right and left longitudinal edges, 12D and 12E, respectively. Into the upper surface 12A are formed parallel-sided channel-shaped slots 16 extending substantially perpendicularly to the longitudinal axis of the body 10 and across the full width of the body 10. The slots 16 are slightly inclined at an angle of about 1 to 3° with respect to the normal to the longitudinal axis as viewed in Figure 1 and inclined at a similar angle with respect to the normal to the longitudinal side edges 12D and 12E as viewed in Figure 2. Thus, in the embodiment illustrated the slots 16 are slightly inclined towards the front face 12B of the body 10 and also inclined such that the slots 16 each have their one end 16A slightly more remote from the front face 12B than their other end 16B.Adjacent each slot 16 is a clearance passage 22 for the chips produced. These clearance passages 22 are in the external planar surface 12A of the body 10 and they open into one side of the adjacent slot 16. The width of the clearance passage 22 in the transverse direction corresponds to the width of the slot 16 in the same direction.

Each slot 16 accommodates a cartridge 24 which carries on its front face 24A an indexable throwaway carbide or other hard metal insert 20 of parallelogram, although substantially square, form which is detachably connected to the cartridge 24 by a clamping screw 26. The cartridges 24 are shaped substantially to fill the slots 16 and they are held in place by recessed grub screws 28 engaging in apertures 30 and 32, on the body and lower rear face of the cartridge, respectively. One such screw 28 holds each of the cartridges 24 in place. The screws 28 are set at an acute angle to the two parallel sides 16C and 16D of the slot 16. This ensures prevention of longitudinal distortion of the body 10 when tightening the grub screw 28. The cartridges 24 are thus adjustable by loosening of the grub screw 28 and sliding the cartridge transversely within the slot to the desired position, and then tightening the grub screw.

Each of the cartridges 24 is a generally rectangular block having an insert pocket 34 formed by a flat insert seating surface 34A extending just short of the full width of the cartridge body 24 (see Fig. 3a), a shoulder 34B and an abutment surface 34C. The shoulder 34B and abutment surface 34C are at an angle of slightly less than 90°, although all three surfaces 34A, 34B and 34C are substantially normal to each other. The shoulder 34B and abutment surface 34C are engaged by respective first and second edges of the indexable carbide insert 20. The cartridges 24 are adapted to carry either right or left hand carbide inserts 20 for presenting cutting edges at the right or left longitudinal edges of the body, respectively. Right hand inserts are arranged in slots which have their right end slightly closer to the front face 12B than their left end and left hand inserts are arranged in slots which have their left end slightly closer to the front face 12B than their right end. As seen in Figures 1 and 2, the first, third and fifth slots 16 in the tool body accommodate cartridges carrying left hand carbide inserts and the second, fourth and sixth slots accommodate cartridges carrying right hand carbide inserts. The insert 20 has a central cylindrical aperture 36 therein for engagement by a countersunk screw 26 which also engages an internally threaded aperture (not shown)in the cartridge body 24. When the screw 26 is loosened the insert 20 may be removed and indexed to a second position. Thus, it is seen that the cutting insert 20 is indexable in the insert cartridge 24 as well as transversely adjustable. To obtain the correct lateral position of each cutting insert relative to the preceding or following cutting insert, the cartridge insert assemblies are preferably toolroom aligned either to provide a constant width condition throughout the total number of inserts, or, to provide a decreasing slot width, or back taper, over the total number of inserts in the body.

It will be understood by those skilled in the art that various modifications and adaptations to the invention herein disclosed may be made without materially departing from the scope of the invention described. For example, it will be apparent that other conventional shapes of cutting insert to that described may be used as well as cutting inserts that are reversible in addition to indexable, and that the transverse slots may be inclined away from, instead of towards, the front face of the cutter body.

## Claims

1. A broaching tool for a broaching machine comprising an elongated tool body capable of being secured to a tool carrier of the broaching machine and having a plurality of openings in the form of transverse slots for receiving respective cutting inserts.

2. A tool according to claim 1 wherein the slots are inclined relative to a line extending breadthwise through and normal to the longitudinal axis of the body.

3. A tool according to claim 2 wherein the slots are inclined forwardly.

4. A tool according to any one of the preceding claims wherein the slots are inclined relative to a line extending widthwise across and normal to the longitudinal axis of the body.

5. A tool according to any one of the preceding claims further including cutting inserts.

6. A tool according to claim 5 wherein the cutting inserts are transversely adjustable.

7. A tool according to claims 5 or 6, wherein the cutting inserts are indexable.

8. A tool according to any one of claims 5 to 7 wherein the cutting inserts are detachably mounted relative to respective insert cartridges which are themselves detachably securable in the respective openings in the body.

9. A tool according to claim 8, wherein the cartridges are arranged to carry right and left hand cutting inserts.

10. A tool according to claim 9 wherein alternate right and left hand cutting inserts are mounted along the length of the body at respective right and left longitudinal edges of the tool body.

11. A tool according to any one of claims 5 to 10 wherein the cutting inserts are disposed to provide co-planar cutting edges.
